(19) Europäisches Patentamt

European Patent Office

Office européen des brevets

(11) Veröffentlichungsnummer : **0 184 837**
**B1**

(12) **EUROPÄISCHE PATENTSCHRIFT**

(45) Veröffentlichungstag der Patentschrift :
15.03.89

(21) Anmeldenummer : 85115796.6

(22) Anmeldetag : 11.12.85

(51) Int. Cl.⁴ : **C 04 B 35/80**, B 28 B   1/52//
B28B1/34

(54) Verfahren zur Herstellung von kurzfaserverstärkten Keramikformkörpern.

(30) Priorität : 14.12.84 DE 3445766

(43) Veröffentlichungstag der Anmeldung :
18.06.86 Patentblatt 86/25

(45) Bekanntmachung des Hinweises auf die Patenterteilung : 15.03.89 Patentblatt 89/11

(84) Benannte Vertragsstaaten :
AT BE CH DE FR GB IT LI LU NL SE

(56) Entgegenhaltungen :
SOVIET INVENTIONS ILLUSTRATED, Sektion Chemie, Woche 8435, 10. Oktober 1984, Zusammenfassung Nr. 84-218534/35, L02, A97, P64, Derwent Publications Ltd., London, GB; & SU - A - 1 066 969
(DAVYDOV. A.A.) 15.01.1984

(73) Patentinhaber : Max-Planck-Gesellschaft zur Förderung der Wissenschaften e.V.
Bunsenstrasse 10
D-3400 Göttingen (DE)

(72) Erfinder : Claussen, Prof. Dr.
Forchenweg 24
D-7250 Leonberg 7 (DE)
Erfinder : Nagel, Alwin
Kantstrasse 21
D-7024 Filderstadt 1 (DE)
Erfinder : Petzow, Günter, Prof. Dr.
Tannenweg 7
D-7022 Leinfelden-Echterdingen (DE)

(74) Vertreter : Weickmann, Heinrich, Dipl.-Ing. et al
Patentanwälte Dipl.-Ing. H.Weickmann Dipl.-Phys.Dr.
K.Fincke Dipl.-Ing. F.A.Weickmann Dipl.-Chem. B.
Huber Dr.-Ing. H. Liska Dipl.-Phys.Dr. J. Prechtel
Postfach 860820
D-8000 München 86 (DE)

## Beschreibung

Die Erfindung betrifft ein Verfahren zur Herstellung von mit Kurzfasern (Whiskern) verstärkten Keramikkörpern.

Die Einbringung von Kurzfasern (Whiskern) mit kleinen Durchmessern (ca. 0,01 bis 10 μm) zur Verstärkung von Keramikkörpern stellt ein bisher noch nicht befriedigend gelöstes Problem dar. Dies liegt insbesondere daran, daß bei konventionellen pulvermetallurgischen Verfahren eine unregelmäßige Verteilung der Fasern (Whiskerbündelung) und eine statistische Orientierung der Whisker eintritt. Daneben ergeben sich aufgrund der relativ geringen Gründichten des keramischen Matrixpulvers während der Herstellung (z. B. Sintern) hohe Matrixzugspannungen bzw. eine hohe Restporosität in der Matrix, die sich ungünstig auswirken. Aus diesen Gründen hat man es zur Herstellung von faserverstärkten Keramiken bisher vorgezogen, kontinuierliche Fasern durch einen Pulverschlicker zu ziehen, aufzuwickeln, zu trocknen und anschließend heißzupressen. Dieses und ähnliche Verfahren haben jedoch den Nachteil, daß die Form des Keramikkörpers sehr einfach sein muß (bzw. nur eine Vorform darstellt). Die verwendeten Fasern besitzen gegenüber Whiskern außerdem einen größeren Durchmesser ($d \geqslant 5$ μm, $d_w$ oft $< 1$ μm), einen kleineren E-Modul und viel geringere Festigkeiten ; so besitzen z. B. SiC-Fasern (Durchmesser 10 μm) eine Festigkeit von 2 000 MPa, SiC-Whisker mit einem Durchmesser von 0,4 μm hingegen eine Festigkeit von 20 000 MPa.

Aufgabe der vorliegenden Erfindung war deshalb die Bereitstellung eines Verfahrens zur Herstellung von mit Kurzfasern (Whiskern) verstärkten Keramikkörpern, mit dem sich die vorstehend genannten Nachteile und Schwierigkeiten vermeiden lassen. Diese Aufgabe wird mit der vorliegenden Erfindung gelöst.

Gegenstand der Erfindung ist ein Verfahren zur Herstellung eines kurzfaserverstärkten Keramikformkörpers, das dadurch gekennzeichnet ist, daß man einen aus dem keramischen Matrixpulver und Whiskern gebildeten feinen homogenen Schlicker mit einer Beschleunigung $g \geqslant 1$ in eine Form gießt, anschließend trocknet, und danach sintert und heißisostatisch nachverdichtet, oder ohne Sinterung direkt heißisostatisch verdichtet.

Die Teilchen des im erfindungsgemäßen Verfahren eingesetzten keramischen Matrixpulvers und/oder die Whisker besitzen vorzugsweise einen Durchmesser von $< 1$ μm ; erfindungsgemäß arbeitet man vorzugsweise mit g-Werten ($g$ = Erdbeschleunigung) von 10 bis $10^4$, also mit der 10- bis $10^4$-fachen Erdbeschleunigung, insbes. mit $g = 10\text{-}10^3$. Das Volumenverhältnis von Whisker/Matrix liegt insbes. zwischen 0,05 und 0,5 ; vorteilhafterweise werden als Whisker z. B. SiC-, Si$_3$N$_4$- und/oder Al$_2$O$_3$-Whisker und insbesondere SiC- oder Si$_3$N$_4$-Whisker verwendet, als Matrix Cordierit-, Mullit-, Si$_3$N$_4$- und/oder ZrO$_2$-haltige keramische Stoffe. Die Whisker besitzen vorzugsweise mittlere Durchmesser von $< 1$ μm und Längen/Durchmesser-Verhältnisse von $> 10$.

Nach dem erfindungsgemäßen Verfahren wird aus dem Matrixpulver und feinen Whiskern auf an sich bekannte und geeignete Weise, z. B. durch Taumelmischen mit Plastikkugeln, ein für den Schlickerguß geeigneter Schlicker hergestellt, in dem die Whisker in der Regel eine gleiche oder etwas höhere Sedimentationsrate besitzen als das Matrixpulver.

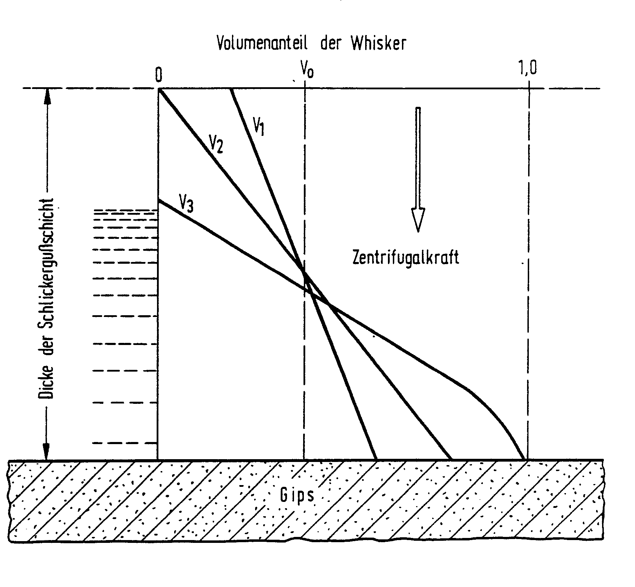

Die Fig. 1 zeigt schematisch die Konzentrationsprofile von Whiskern in einem über einer Gipsplatte befindlichen Schlickerguß. Wie die Figur zeigt, ergeben sich mit zunehmenden Unterschied in der Sedimentationsrate steiler werdende Konzentrationsprofile ($v_1$, $v_2$, $v_3$) ; beim Konzentrationsprofil $v_0$ = konstant ist die Schlickersedimentation des Pulvers und der Whisker identisch. Da jedoch in den meisten Fällen die zugbeanspruchte Zone von Konstruktionsteilen an der Oberfläche liegt, ist eine zur Oberfläche hin (d. h. also in der Figur zur Gipsseite hin) zunehmende Whiskerkonzentration von Vorteil. Eine Orientierung der Whisker senkrecht zur Oberfläche (Zugzone) ist jedoch mechanisch ungünstig und sollte durch eine Ausrichtung der Whisker parallel zur Zugrichtung ersetzt sein. Erfindungsgemäß wird nun durch Erhöhung der Beschleunigung ($g$ = 1 : Erdbeschleunigung) eine Ausrichtung der Whisker parallel zur Zugrichtung (wie in der Figur angedeutet) erzielt. Bei einer Laborzentrifuge mit einem Radius von 10 cm wird beispielsweise bei einer Drehzahl von 10 000 UpM eine Beschleunigung von ca. 10 000 g erzielt. Die erhöhte Beschleunigung bewirkt vermutlich, daß Reibkräfte zwischen den Whiskern beim Absinken bzw. beim Anlagern auf die Grundfläche weniger wirksam werden und daher eine Parallelorientierung besser gewährleistet wird. Die Zentrifugalkraft (d. h. die Umdrehungsgeschwindigkeit) sollte vorzugsweise so eingestellt werden, daß die Größentrennung der Matrixpulverteilchen in einem sinnvollen Rahmen bleibt, d. h. je kleiner die Teilchengrößenverteilung des Matrixpulvers ist, desto höhere g-Werte können angewandt werden.

Versuche mit Mischungen aus Whiskern, z. B. mit SiC- oder Si$_3$N$_4$-Whiskern, haben ergeben, daß bei hohen g-Werten, z. B. bei $g \geqslant 10^4$, Whiskeragglomerate, grobe Whisker und Bruchstücke von Whiskermaterialteilen oder auch von Mahlwerkzeug, die als Verunreinigungen im Schlicker vorhanden sind, schon nach sehr kurzer Zeit (eine bis mehrere Minuten) vollständig an der unteren Seite, z. B. am Boden der Zentrifuge oder an der Grundfläche, wie z. B. der Gipsplatte in Fig. 1, angesammelt sind. Durch ein Abgießen (Abdekantieren) des verbleibenden Schlickers kann auf diese Weise eine für die weitere Verarbeitung zweckmäßige « Reinigung », d. h. Entfernung von unerwünschten Verunreinigungen und Clustern, die die Festigkeit des Keramikformkörpers vermindern können, erreicht werden.

Durch einen anschließenden Schlickerguß des auf diese Weise gereinigten Schlickers mit g ≥ 1, vzw. bei g = 10 bis 100, kann eine fast vollständige zweidimensionale Ausrichtung aller Whisker erreicht werden. Es kann deshalb zweckmäßig sein, insbesondere auch zur Erzielung einer weitgehend vollständigen zweidimensionalen Ausrichtung der Whisker, den Schlicker vor dem Formgießen einer Behandlung mit hohen g-Werten, wie z. B. mit g = 10⁴, zu unterwerfen und vom entstandenen Bodensatz abzutrennen.

Für eine effektive Whiskerverstärkung keramischer Werkstoffe ist es insbesondere zweckmäßig, mit Matrix/Whisker-Kombinationen zu arbeiten, bei denen die thermischen Ausdehnungskoeffizienten von Matrix und Whisker angepaßt sind, d. h. sich möglichst wenig unterscheiden, und/oder in denen die Whisker hohe Festigkeit und/oder hohe E-Module im Vergleich zum Matrix-material aufweisen. Besonders bevorzugt sind die folgenden Matrix(m)/Whisker(w)-Kombinationen :

$Si_3N_4$(m)/SiC(w) ;    $Si_3N_4$(m)/$Si_3N_4$(w) ; $ZrO_2$(TZP)(m)/$Al_2O_3$(w) ;  Mullit(m)/SiC(w) ;  Cordierit(m)/SiC(w) ;  Cordierit(m)/$Si_3N_4$(w) und/oder SiC(m)/SiC(w) ;  ferner  auch  SiC(m)/$Si_3N_4$(w) ; $ZrO_2$(m)/SiC(w) ; $ZrO_2$(m)/$Si_3N_4$(w).

Mit dem erfindungsgemäßen Verfahren ist es möglich, die mit den bisherigen Verfahren zur Herstellung von kurzfaserverstärkten Keramikformkörpern verbundenen Nachteile (insbesondere unregelmäßige Verteilung/statistische Anordnung der Whiskern, hohe Matrixzugspannungen und hohe Restporosität der Matrix infolge geringer Gründichten) zu vermeiden : Die wesentlichen Vorteile des erfindungsgemäßen Verfahrens gegenüber den bisher bekannten Methoden zur Einbringung von Whiskern (oder Kurzfasern, d. h. mit einem Faserlänge/Faserdurchmesser-Verhältnis > 10) in keramische Werkstoffe sind insbesondere : zweidimensionale (flächenmäßige) Orientierung der Whisker, kontrolliert einstellbare Whiskerkonzentration (Volumenverhältnis) innerhalb des Formkörpers, wie z. B. eine erhöhte Konzentration im zugbeanspruchten Bereich des Verbundformkörpers ; hohe Gründichte des Matrixpulvers zwischen den Whiskern.

Aufgrund der Verfahrensmaßnahmen und Eigenschaften der erhaltenen Formkörper eignet sich das erfindungsgemäße Verfahren insbesondere zur Herstellung von rotationssymmetrischen Verbundformkörpern und Motorkeramiken, wie z. B. für Turbinenrotoren, Turbinenstatoren, Zylinder, Scheiben usw.

Die nachfolgenden Beispiele erläutern die Erfindung näher, ohne sie darauf zu beschränken. Wenn nicht anders angegeben, beziehen sich Temperaturangaben auf Celsius-Grade und Prozentangaben auf Gewichtsprozente.

Beispiele

Beispiel 1

100 g einer Mischung aus 50 Gew.-% Cordierit (= 64 Vol.-%), 30 Gew.-% 3 Mol%-$Y_2O_3$-haltiges $ZrO_2$ (= 16 Vol.-%) (3Y-TZP) und 20 Gew.-% $Si_3N_4$-Whisker (= 20 Vol.-%) (SNW 1, Tateho Chem., Durchmesser 0,2-0,5 mm) wurde in Propanol 24 Stunden mit Plastikkugeln (Durchmesser 2-4 mm) in einem Trommelmischer vermischt. Die Mischungsverhältnisse haben zur Folge, daß die Cordierit-$ZrO_2$-Matrix denselben mittleren thermischen Ausdehnungskoeffizienten besitzt wie die $Si_3N_4$-Whisker ($\alpha$ = 2,5 · 10⁻⁶/K). (Das Cordierit und Y-TZP wurden zuvor in einem Attritor 6 Stunden gemahlen.) Der Schlicker wurde anschließend in einer Zentrifuge mit 10 000 UpM auf eine Gipsunterlagen druckgegossen. Die getrockneten Plättchen wurden anschließend bei 1 200 °C heißgepreßt. Von der der Gipsplatte zugewandten Fläche wurde 1 mm abgeschliffen, um die hier angehäuften Whiskercluster, gröbere $Si_3N_4$-Teilchen (> 3 mm) und andere vom Attritorprozeß herrührende Bruchstücke zu entfernen. Die Biegefestigkeit betrug 410 MPa, wenn die Proben so geprüft wurden, daß die zugbeanspruchte Seite identisch mit der der Gipsplatte zugewandten Seite war. Aus metallographischen Untersuchungen ergab sich, daß die $Si_3N_4$-Whisker sowohl eine zur Gipsplatte hin zunehmende Konzentration (infolge schnellerer Sedimentation) als auch eine zweidimensionale, d. h. parallel zur Zugrichtung vorliegende Orientierung besaßen (vgl. Fig. 1). Whisker senkrecht zur Gipsplatte (parallel zur Zentrifugalkraft) wurden nicht festgestellt.

Beispiel 2

Einem sinterfähigen, 4 Mol-% $Y_2O_3$- und 4 Mol-% $Al_2O_3$-haltigen $Si_3N_4$-Pulver wurden wie in Beispiel 1 beschrieben 30 Vol.-% SiC-Whisker (SCW 1, Tateho Chemical Ind., Durchmesser 0,05-0,2 μm) zugemischt, der Schlicker mit 1 Gew.-% Dispersionsmittel (Dolapix) versetzt und mit 1 000 UpM schlickergegossen. Es zeigte sich dabei eine ähnliche Orientierung und Konzentration der Whisker wie in Beispiel 1. Eine Sinterung in $N_2$ bei 1 700 °C während 2 Stunden führte nur zu einer Dichte von ca. 85 %, so daß hier eine heißisostatische Nachverdichtung oder eine heißisostatische Verdichtung der mit Zentrifugalkraft hergestellten, whiskerverstärkten Grünkörper nach dem Glaspulver-Kapselverfahren zweckmäßig ist.

Beispiel 3

100 g einer Zusammensetzung aus 45 Vol.-% Cordierit, 35 Vol.-% unstabilisiertes $ZrO_2$ und 20 Vol.-% SiC-Whisker (SCW 1, Tateho Chem., Durchmesser 0,05-0,2 μm) wurden wie folgt gemischt : Zunächst wurde Cordierit mit $ZrO_2$ sechs Stunden in Propanol attritiert, anschließend wurdem dem Schlicker die SiC-Whisker zugesetzt und wie in Beispiel 1 24 Stunden mit Plastikkugeln vermischt. Der Schlicker wurde dann eine Minute mit 10 000 UpM zentrifugiert und danach dekantiert. Dadurch werden grobe Whisker, Whiskeragglomerate und andere gröbere Bruchstücke (> 3 μm) aus dem Schlicker entfernt. Der so « gereinigte » Schlicker wurde anschließend wie in Beispiel 1 mit 100 UpM auf eine Gipsplatte zentrifugiert und getrocknet. Die so erzeugten zylindrischen Scheiben (Durchmesser 15 mm, Höhe 5 mm) wurden anschließend bei 1 350 °C an Luft eine Stunde gesintert. Die metallographische Untersuchung ergab (wie in Beispiel 1) eine fast vollständige zweidimensionale Ausrichtung der Whisker senkrecht zur Zentrifugalrichtung (parallel zur Gipsplatte). Trotz einer Porosität von 9 % betrug der Bruchwiderstand ($K_{IC}$) nach der Vickerseindruckmethode ~ 9 MPa$\sqrt{m}$. Dichte Proben desselben Materials ohne Whisker besaßen Werte < 4 MPa $\sqrt{m}$.

## Beispiel 4

Der nach Beispiel 3 hergestellte Schlicker wurde mit 1 Gew.-% eines Dispersionsmittels (Dolapix) versetzt und mit höheren Zentrifugalkräften (10 000 UpM) schlickergegossen. Nach einer Sinterung wie in Beispiel 3 und anschließender metallographischer Untersuchung zeigte sich ebenfalls eine zweidimensionale (schichtförmige) Ausrichtung der Whisker, wobei die Konzentration der Whisker zur Oberfläche hin (die beim Schlickerguß an der Gipsfläche auflag) erheblich zunahm. Eine ca. 1 mm dicke Schicht auf der entgegengesetzten Seite enthielt praktisch keine Whisker mehr (entspricht etwa der Konzentrationskurve $v_3$ in Fig. 1).

## Beispiel 5

Der wie in Beispiel 1 hergestellten Cordierit (64 Vol.-%)-3Y-TZP (16 Vol.-%)-Mischung wurden 20 Vol.-% SiC-Whisker wie in Beispiel 3 zugemischt und « gereinigt », und anschließend in zylindrische Gipsformen (35 mm Durchmesser) schlickergegossen. Nach einer Trocknung wurden die 6 mm hohen Proben bei 1 200 °C 20 Minuten heißgepreßt. An daraus hergestellten Stäbchen (2,5 × 2,5 × 25 mm) wurde die 4-Punktbiegefestigkeit (20/7 mm Auflager) gemessen. Bei Raumtemperatur betrug sie 480 MPa, bei 1 000 °C 395 MPa. Die Festigkeit von gleichartig hergestellten Proben ohne Whisker betrug 185 MPa (Raumtemperatur) bzw. 170 MPa (1 000 °C).

## Beispiel 6

100 g Si$_3$N$_4$-Pulver (LC 10, Fa. Starck) mit 10 Gew.-% YAG (5Y$_2$O$_3$ · 3Al$_2$O$_3$) wurden wie in Beispiel 1 20 Vol.-% SiC-Whisker zugemischt. Der Schlicker wurde in der gleichen Art wie in Beispiel 4 in Gipsformen gegossen, getrocknet und bei 1 700 °C 50 Minuten heißgepreßt. Auch hier waren die Whisker fast vollständig parallel zur Gipsunterseite (senkrecht zur Schwerkraftrichtung) ausgerichtet. Der Konzentrationsgradient lag zwischen $v_1$ und $v_0$ der Fig. 1. Der $K_{IC}$-Wert nach der Vickerseindruckmethode lag bei 7,3 MPa$\sqrt{m}$, im Vergleich zu ca. 5 MPa$\sqrt{m}$ bei Proben ohne SiC-Whisker.

## Beispiel 7

100 g 10 Vol.-% ZrO$_2$ enthaltendem attritiertem Mullit-Pulver wurden 30 Vol.-% SiC-Whisker wie in Beispiel 1 zugemischt. Der Schlicker wurde wie in Beispiel 3 angegeben « zentrifugal » gereinigt, anschließend in Gipsformen mit 100 UpM nach Beispiel 3 gegossen, getrocknet und bei 1 500 °C 30 Minuten heißgepreßt. Das Whiskerkonzentrationsprofil entsprach etwa $v_1$ der Fig. 1. Der Vickers-$K_{IC}$ betrug auf der Unterseite 6,2 MPa$\sqrt{m}$ und auf der Oberseite (whiskerärmer) 4,3 MPa$\sqrt{m}$. Die Ausrichtung der Whisker war ebenfalls vollständig senkrecht zur Zentrifugalkraft.

## Patentansprüche

1. Verfahren zur Herstellung eines kurzfaserverstärkten Keramikformkörpers, dadurch gekennzeichnet, daß man einen aus dem keramischen Matrixpulver und Whiskern gebildeten feinen homogenen Schlicker mit einer Beschleunigung g ⩾ 1 in eine Form gießt, anschließend trocknet und danach sintert und heißisostatisch nachverdichtet, oder ohne Sinterung direkt heißisostatisch verdichtet.

2. Verfahren nach Anspruch 1, dadurch gekennzeichnet, daß die Teilchen des keramischen Matrixpulvers und die Whisker einen Durchmesser < 1 μm besitzen.

3. Verfahren nach Anspruch 1 oder 2, dadurch gekennzeichnet, daß die g-Werte 10 bis 10$^4$, insbesondere 10-10$^3$, betragen.

4. Verfahren nach einem der Ansprüche 1 bis 3, dadurch gekennzeichnet, daß das Volumenverhältnis Whisker/Matrix zwischen 0,05 und 0,5 liegt.

5. Verfahren nach einem der vorhergehenden Ansprüche, dadurch gekennzeichnet, daß man als Whisker SiC-, Si$_3$N$_4$- und/oder Al$_2$O$_3$-Whisker verwendet.

6. Verfahren nach einem der vorhergehenden Ansprüche, dadurch gekennzeichnet, daß man als Whisker solche mit mittleren Durchmessern < 1 μm und Längen/Durchmesser-Verhältnissen von > 10 verwendet.

7. Verfahren nach einem der vorhergehenden Ansprüche, dadurch gekennzeichnet, daß die Matrix aus Cordierit-, Mullit-, Si$_3$N$_4$- und/oder ZrO$_2$-haltigen keramischen Stoffen besteht.

8. Verfahren nach einem der vorhergehenden Ansprüche, dadurch gekennzeichnet, daß man Matrix/Whisker-Kombinationen verwendet, bei denen die thermischen Ausdehnungs koeffizienten von Matrix und Whisker angepaßt sind und in denen die Whisker hohe Festigkeiten und/oder hohe E-Module im Vergleich zum Matrixmaterial aufweisen.

9. Verfahren nach Anspruch 8, dadurch gekennzeichnet, daß man als Matrix-(m)/Whisker(w)-Kombinationen Si$_3$N$_4$(m)/SiC(w) ;

Si₃N₄(m)/Si₃N₄(w) ; ZrO₂(TZP) (m)/Al₂O₃(w) : Mullit(m)/SiC(w) ; Cordierit(m)/SiC(w) : Cordierit(m)/Si₃N₄(w) oder SiC(m)/SiC(w) verwendet.

10. Verfahren nach einem der vorhergehenden Ansprüche, dadurch gekennzeichnet, daß man den Schlicker vor dem Formgießen einer Behandlung mit hohen g-Werten unterwirft und vom Bodensatz abtrennt.

11. Verfahren nach Anspruch 10, dadurch gekennzeichnet, daß man den Schlicker einer Behandlung mit $g = 10^4$ unterwirft, vom Bodensatz abtrennt und das Formgießen mit $g = 10$ bis 100 durchführt.

12. Verfahren nach einem der vorhergehenden Ansprüche, dadurch gekennzeichnet, daß man rotationssymmetrische Keramikformkörper, wie z. B. Turbinenrotoren, Turbinenstatoren, Zylinder oder Scheiben herstellt.

13. Keramische Formkörper, hergestellt nach dem Verfahren gemäß einem der Ansprüche 1 bis 12.

## Claims

1. Process for the production of a short fibre-reinforced ceramic body, characterised in that one casts a fine homogeneous slurry formed from the ceramic matrix powder and whiskers with an acceleration of $g \geqslant 1$ into a mould, subsequently dries and thereafter sinters and hot-isostatically post-consolidates or directly hot-isostatically consolidates without sintering.

2. Process according to claim 1, characterised in that the particles of the ceramic matrix powder and the whiskers possess a diameter of $< 1 \ \mu m$.

3. Process according to claim 1 or 2, characterised in that the g values amount to 10 to $10^4$, especially $10-10^3$.

4. Process according to one of claims 1 to 3, characterised in that the volume ratio of whisker/matrix lies between 0.05 and 0.5.

5. Process according to one of the preceding claims, characterised in that as whiskers one uses SiC, Si₃N₄ and/or Al₂O₃ whiskers.

6. Process according to one of the preceding claims, characterised in that as whiskers one uses those with an average diameter of $< 1 \ \mu m$ and length/diameter ratios of $> 10$.

7. Process according to one of the preceding claims, characterised in that the matrix consists of cordierite-, mullite-, Si₃N₄- and/or ZrO₂-containing ceramic materials.

8. Process according to one of the preceding claims, characterised in that one uses matrix/whisker combinations in which the thermal coefficients of expansion of matrix and whisker are matched and in which the whiskers display high strengths and/or high E modules in comparison with the matrix material.

9. Process according to claim 8, characterised in that, as matrix (m)/whisker (w) combinations, one uses Si₃N₄(m)/SiC(w) ; Si₃N₄(m)/Si₃N₄(w) ; ZrO₂(TZP) (m)/Al₂O₃(w) ; mullite (m)/SiC(w) ; cordierite (m)/SiC(w) ; cordierite (m)/Si₃N₄(w) or SiC(m)/SiC(w).

10. Process according to one of the preceding claims, characterised in that one subjects the slurry, before the mould casting, to a treatment with high g values and separates from bottom deposit.

11. Process according to claim 10, characterised in that one subjects the slurry to a treatment with $g = 10^4$, separates off from bottom deposit and carries out the mould casting with $g = 10$ to 100.

12. Process according to one of the preceding claims, characterised in that one produces rotation-symmetrical formed bodies, such as e. g. turbine rotors, turbine stators, cylinders or discs.

13. Ceramic formed bodies produced according to the process according to one of claims 1 to 12.

## Revendications

1. Procédé de fabrication d'un corps moulé de céramique renforcé de fibres courtes, caractérisé en ce qu'on verse dans un moule une barbotine fine et homogène formée de la poudre de matrice céramique et de trichites, avec une accélération $g \geqslant 1$, puis en ce qu'on la sèche, puis en ce qu'on la fritte et en ce qu'on la soumet à une post-compaction en isostasie thermique, ou en ce qu'on la compacte directement, sans frittage, en isostasie thermique.

2. Procédé suivant la revendication 1, caractérisé en ce que les particules de la poudre de matrice céramique et les trichites possèdent un diamètre inférieur à $1 \ \mu m$.

3. Procédé suivant les revendications 1 ou 2, caractérisé en ce que les valeurs de g sont de 10 à $10^4$, en particulier de 10 à $10^3$.

4. Procédé suivant l'une des revendications 1 à 3, caractérisé en ce que le rapport volumique trichite/matrice est compris entre 0,05 et 0,5.

5. Procédé suivant l'une des revendications précédentes, caractérisé en ce qu'on utilise comme trichites des trichites de SiC, Si₃N₄ et/ou Al₂O₃.

6. Procédé suivant l'une des revendications précédentes, caractérisé en ce qu'on utilise comme trichites des trichites ayant des diamètres moyens inférieurs à $1 \ \mu m$ et des rapports longueur/diamètre supérieurs à 10.

7. Procédé suivant l'une des revendications précédentes, caractérisé en ce que la matrice se compose de substances céramiques contenant de la cordiérite, de la mullite, Si₃N₄ et/ou ZrO₂.

8. Procédé suivant l'une des revendications précédentes, caractérisé en ce qu'on utilise les combinaisons matrice/trichite pour lesquelles les coefficients de dilatation thermiques de la matrice et des trichites sont ajustés et dans lesquels les trichites présentent des résistances élevées et/ou des modules E élevés par comparaison avec la matière de matrice.

9. Procédé suivant la revendication 8, caractérisé en ce qu'on utilise comme combinaisons matrice (m)/trichite(w), $Si_3N_4(m)/SiC(w)$ ; $Si_3N_4(m)/Si_3N_4(w)$ ; $ZrO_2(TZP)$ $(m)/Al_2O_3(w)$ ; mullite (m)/SiC(w) ; cordiérite (m)/SiC(w) ; cordiérite (m)/$Si_3N_4(w)$ ou SiC(m)/SiC(w).

10. Procédé suivant l'une des revendications précédentes, caractérisé en ce qu'on soumet la barbotine, avant la coulée en moule, à un traitement avec des valeurs de g élevées, et en ce qu'on sépare le sédiment.

11. Procédé suivant la revendication 10, caractérisé en ce qu'on soumet la barbotine à un traitement avec $g = 10^4$ et en ce qu'on effectue la coulée en moule avec $g = 10$ à $100$.

12. Procédé suivant l'une des revendications précédentes, caractérisé en ce qu'on fabrique des corps moulés en céramique ayant une symétrie de révolution, tels que par exemple des rotors de turbine, des stators de turbine, des cylindres ou des disques.

13. Corps moulés en céramique, fabriqués par le procédé conforme à l'une des revendications 1 à 12.

Volumenanteil der Whisker